# EUROPÄISCHE PATENTSCHRIFT

(11) **EP 4 252 912 B1**
(45) Veröffentlichungstag und Bekanntmachung des Hinweises auf die Patenterteilung: **01.01.2025**
(21) Anmeldenummer: 23191340.1
(22) Anmeldetag: 02.08.2021
(51) Int. Cl.: B04B 3/04

(54) **SIEBSCHNECKENZENTRIFUGE**
SCREW-TYPE SCREENING CENTRIFUGE
CENTRIFUGEUSE À VIS À TAMIS

(43) Veröffentlichungstag der Anmeldung: 04.10.2023
(62) Teilanmeldung aus: 21189098.3
(73) Patentinhaber: ANDRITZ Separation GmbH, 85256 Vierkirchen (DE)
(72) Erfinder: SCHERER, Dieter, 85256 Vierkirchen (DE); ZHU, Franziska, 85256 Vierkirchen (DE)
(74) Vertreter: Viering, Jentschura & Partner mbB Patent- und Rechtsanwälte

(56) Entgegenhaltungen:
- WO-A1-2015/123735
- US-A- 1 650 685
- US-A1- 2003 234 214

## Beschreibung

Die Erfindung betrifft eine Siebschneckenzentrifuge gemäß dem Oberbegriff von Anspruch 1.

Eine solche Siebschneckenzentrifuge ist z.B. aus der US1650685 oder aus der DE 39 09 793 A1 bekannt.

Es ist eine Aufgabe der Erfindung, eine Siebschneckenzentrifuge bereitzustellen, bei welcher ein Schneckenhauptkörper einfacher ein- und ausbaubar ist. Hierzu stellt die Erfindung eine Siebschneckenzentrifuge bereit, welche aufweist eine Schneckenantriebswelle, welche sich entlang einer Axialachse erstreckt, eine Schnecken-Nabe, welche an einem (z.B. einem ersten) Axialende der Schneckenantriebswelle befestigt, optional lösbar befestigt, ist, einen hohlen Schneckenhauptkörper, welcher einen ersten Schneckenhauptkörper-Axialendabschnitt und einen zweiten Schneckenhauptkörper-Axialendabschnitt hat und welcher sich axial entlang der Axialachse von seinem erstem zu seinem zweiten Schneckenhauptkörper-Axialendabschnitt in Richtung entgegengesetzt zu einem zweiten Axialende der Schneckenantriebswelle erstreckt und welcher eine sich um die Axialachse herum erstreckende Schneckenhauptkörperumfangswand aufweist, wobei der hohle Schneckenhauptkörper an seinem ersten Schneckenhauptkörper-Axialendabschnitt an der Schnecken-Nabe lösbar befestigt ist mittels wenigstens eines Spannmittels (z.B. mittels einer Mehrzahl von Spannmitteln), von welchem (z.B. von welchen) der Schneckenhauptkörper und die Schnecken-Nabe gegeneinander verspannt sind, und eine ringförmige Ringspaltabdeckung, welche eine zentrale Öffnung (z.B. eine zentrale Aufnahmeöffnung) hat zur Aufnahme einer Zuführleitung (z.B. eines Füllrohrs bzw. einer Füllleitung) zum Zuführen von zu zentrifugierendem Material (z.B. einer zu zentrifugierenden Suspension) in das Innere des Schneckenhauptkörpers und welche sich von der Schneckenhauptkörper-Umfangswand bis zur zentralen Öffnung erstreckt, um bei in die Öffnung eingesetzter Zuführleitung einen Ringspalt zwischen der aufgenommenen Zuführleitung und der Schneckenhauptkörper-Umfangswand abzudecken. Das wenigstens eine Spannmittel (z.B. das jeweilige Spannmittel) hat einen dem zweiten Schneckenhauptkörper-Axialendabschnitt zugewandten Werkzeugeingriffsabschnitt. Radial zwischen der Schneckenhauptkörper-Umfangswand und der Ringspaltabdeckung ist wenigstens ein Axialzugangskanal ausgebildet, über welchen der Werkzeugeingriffsabschnitt des jeweiligen Spannmittels vom zweiten Schneckenhauptkörper-Axialendabschnitt her axial zugänglich ist. Z.B. kann jedem Werkzeugeingriffsabschnitt ein jeweiliger Axialzugangskanal zugeordnet sein, über welchen der jeweilige Werkzeugeingriffsabschnitt des jeweiligen Spannmittels vom zweiten Schneckenhauptkörper-Axialendabschnitt her axial zugänglich ist. Es kann aber z.B. auch ein (z.B. ein einziger) sich um die Axialachse ringförmig erstreckender Axialzugangskanal ausgebildet sein, über welchen der Werkzeugeingriffsabschnitt des jeweiligen Spannmittels vom zweiten Schneckenhauptkörper-Axialendabschnitt her axial zugänglich ist.

Der Ausdruck "axial" ist in dieser Anmeldung jeweils auf die Axialachse bezogen und z.B. als zur Axialachse parallel verlaufend zu verstehen, und der Ausdruck "radial" ist in dieser Anmeldung ebenfalls jeweils auf die Axialachse bezogen und damit als radial zu dieser Axialachse zu verstehen.

Indem der jeweilige Werkzeugeingriffsabschnitt vom zweiten Schneckenhauptkörper-Axialendabschnitt her axial zugänglich ist, welcher zweite Schneckenhauptkörper-Axialendabschnitt von der Schneckenantriebswelle weggewandt angeordnet ist, ist das jeweilige Spannmittel von einem Monteur leicht zu erreichen, sodass der Schneckenhauptkörper einfach ein- und ausgebaut werden kann.

Zum Beispiel hat der Axialzugangskanal eine Axialzugangsöffnung, die radial zwischen der Ringspaltabdeckung und der Schneckenhauptkörper-Umfangswand angeordnet ist und die axial dem zweiten Schneckenhauptkörper-Axialendabschnitt zugewandt ist und die radial zumindest teilweise, z.B. komplett, mit dem wenigstens einen Werkzeugeingriffsabschnitt überlappt. Der Axialzugangskanal ist z.B., zumindest teilweise, radial innen von der Ringspaltabdeckung und radial außen von der Schneckenhauptkörper-Umfangswand begrenzt ist.

Zum Beispiel ist das jeweilige Spannmittel als Axialspannmittel ausgebildet und sind der Schneckenhauptkörper und die Schnecken-Nabe axial hintereinander gesetzt, optional axial aneinandergesetzt (z.B. unmittelbar aneinandergesetzt), und mittels des jeweiligen Axialspannmittels axial miteinander verspannt, wobei optional das jeweilige Axialspannmittel als Schraube ausgebildet ist, welche einen Schraubenkopf aufweist, von welchem der jeweilige Werkzeugeingriffsabschnitt gebildet wird. Das axiale Hintereinandersetzen bzw. das axiale Aneinandersetzen, sofern nicht als unmittelbar hintereinandergesetzt bzw. unmittelbar aneinandergesetzt beschrieben, umfasst auch, dass zwischen dem Schneckenhauptkörper und der Schnecken-Nabe noch weitere Bauteile, wie weiter unten noch erläutert, axial zwischengeordnet bzw. axial zwischengesetzt sein können/sind. Zum Beispiel ist von und/oder an der Schneckenhauptkörper-Umfangswand am ersten Axialendabschnitt des Schneckenhauptkörpers ein Schneckenhauptkörperringflansch ausgebildet, der sich rings um die Axialachse herum erstreckt und über welchen der Schneckenhauptkörper an seinem ersten Axialendabschnitt an einem Nabenringflansch der Schneckenkonus-Nabe, der sich rings um die Axialachse herum erstreckt, lösbar befestigt ist, wobei der Schneckenhauptkörperringflansch und der Nabenringflansch (in Richtung parallel zur Axialachse) axial hintereinander, optional axial aneinander (z.B. unmittelbar aneinander), gesetzt und durch das jeweilige Axialspannmittel axial miteinander verspannt sind. Der Schneckenhauptkörperringflansch ist z.B. als sich bezüglich der Axialachse radial nach innen erstreckender Schneckenhauptkörperringflansch ausgebildet ist, und der Nabenringflansch ist z.B. als sich bezüglich der Axialachse radial nach außen erstreckender Nabenringflansch ausgebildet ist.

Zum Beispiel ist der hohle Schneckenhauptkörper in Form eines hohlen Schneckenkonus ausgebildet, wobei der erste Axialendabschnitt ein Kleindurchmesser-Axialendabschnitt des Schneckenkonus ist und der zweite Axialendabschnitt ein Großdurchmesser-Endabschnitt des Schneckenkonus ist.

Zum Beispiel weist die Ringspaltabdeckung einen hohlen zylindrischen oder hohlen konischen Abdeckungskörper auf und/oder wird von einem hohlen zylindrischen oder hohlen konischen Abdeckungskörper gebildet, der eine sich um die Axialachse herum erstreckende Abdeckungs-Umfangswand aufweist, wobei der Axialzugangskanal als sich rings um die Axialachse herum radial zwischen der Abdeckungs-Umfangswand und der Schneckenhauptkörper-Umfangswand erstreckender Ringkanal ausgebildet ist. Die Ringspaltabdeckung kann aber auch eine Ringplatte aufweisen, die sich rings der (bzw. rings um die) Axialachse erstreckt. Der hohle zylindrische oder hohle konische Abdeckungskörper kann einen Füllverteiler darstellen bzw. bilden, welcher die zentrale Öffnung definiert und über welchen das zu zentrifugierenden Material (z.B. die Suspension), das (die) von der in der Öffnung aufgenommenen Zuführleitung zugeführt wird, innenumfänglich (d.h. radial innerhalb des Schneckenhauptkörpers umfänglich) verteilt wird. Die Ringspaltabdeckung kann ferner teilweise auch von einem, z.B. weiter unten noch erläuterten, Materialzuführ-Leitbauteil (z.B. Suspensionszuführ-Leitbauteil) gebildet sein, welches seinerseits Bestandteil eines vom Schneckenhauptkörper und dem Materialzuführ-Leitbauteil gebildeten Schneckengesamtkörpers sein kann. Ein solches Materialzuführ-Leitbauteil kann z.B. einen durch Schaufeln gebildeten Materialbeschleuniger (z.B. Suspensionsbeschleuniger) aufweisen, mittels dessen das zu zentrifugierende Material radial von innen nach außen beschleunigt wird. Das Materialzuführ-Leitbauteil ist z.B. am ersten Schneckenhauptkörper-Axialendabschnitt angebracht (z.B. axial angesetzt), wobei Bauteile (wie weiter unten noch erläutert) axial zwischen dem Schneckenhauptkörper und dem Materialzuführ-Leitbauteil angeordnet sein können.

Die Ringspaltabdeckung (z.B. der als Füllverteiler dienende Abdeckungskörper oder der Füllverteiler) kann z.B. einen Abdeckungsringflansch aufweisen, der sich rings um die Axialachse herum erstreckt, wobei der Abdeckungsringflansch
- axial an den Schneckenhauptkörperringflansch und/oder an den Nabenringflansch angesetzt (z.B. unmittelbar angesetzt) und/oder axial zwischen den Schneckenhauptkörperringflansch und den Nabenringflansch gesetzt ist und
- zusammen mit dem Schneckenhauptkörperringflansch und dem Nabenringflansch mittels des jeweiligen Axialspannmittels axial verspannt ist.

Die Siebschneckenzentrifuge weist ferner z.B. auf eine drehbar gelagerte Siebtrommel, welche eine Siebtrommelumfangswand aufweist, von welcher der Schneckenhauptkörper rings der Axialachse umgeben ist und welche (z.B. auf ihrer radial inneren Umfangswandseite) mit einem Siebmittel ausgestattet ist, und eine (z.B. separate) Einstellringscheibe, welche sich rings um die Axialachse herum erstreckt und welche axial zwischen den Schneckenhauptkörper und die Schnecken-Nabe, optional axial zwischen den Schneckenhauptkörperringflansch und den Nabenringflansch, gesetzt ist und mittels welcher ein Radialspalt zwischen dem Schneckenhauptkörper und der Siebtrommelumfangswand eingestellt wird bzw. einstellbar ist, wobei die Einstellringscheibe mittels des jeweiligen Axialspannmittels zusammen mit dem Schneckenhauptkörper und der Schnecken-Nabe, optional zusammen mit dem Schneckenhauptkörperringflansch und dem Nabenringflansch, axial verspannt ist. Die Siebtrommel ist z.B. drehfest mit einer Trommelantriebswelle verbunden, welche z.B. als Hohlwelle ausgebildet ist und sich koaxial um die Schneckenantriebswelle erstreckt. Die Einstellung des Radialspalts erfolgt durch Auswahl und Einsatz unterschiedlich dicker Einstellringscheiben.

Die Siebschneckenzentrifuge weist ferner z.B. auf ein separates, ringförmiges Materialzuführ-Leitbauteil, welches z.B. wie das oben erläuterte Materialzuführ-Leitbauteil ausgebildet sein kann und welches optional Material-Leitfinnen (welche z.B. Pumpenradschaufeln bzw. Pumpenradflügel darstellen bzw. als solche ausgebildet sind) aufweist, welches sich rings um die Axialachse herum erstreckt und welches dazu eingerichtet ist, um das durch die zentrale Öffnung hindurch gelangende, zu zentrifugierende Material (z.B. die zu zentrifugierende Suspension) zu einer Außenseite des Schneckenhauptkörpers (z.B. des Schneckengesamtkörpers) zu leiten, wobei das Materialzuführ-Leitbauteil axial zwischen den Schneckenhauptkörper und die Schnecken-Nabe gesetzt ist und mittels des jeweiligen Axialspannmittels zusammen mit dem Schneckenhauptkörper und der Schnecken-Nabe axial verspannt ist.

Das Materialzuführ-Leitbauteil kann z.B. zwischen den Schneckenhauptkörperringflansch und den Nabenringflansch gesetzt sein. Das Materialzuführ-Leitbauteil kann z.B. zwischen die Einstellringscheibe und die Schnecken-Nabe gesetzt sein. Das Materialzuführ-Leitbauteil kann z.B. zwischen die Einstellringscheibe und den Nabenringflansch gesetzt sein. Das Materialzuführ-Leitbauteil kann z.B. zwischen den Abdeckungsringflansch und die Schnecken-Nabe gesetzt sein. Das Materialzuführ-Leitbauteil kann z.B. zwischen den Abdeckungsringflansch und den Nabenringflansch gesetzt sein.

Die Siebschneckenzentrifuge weist ferner z.B. die Zuführleitung zum Zuführen des zu zentrifugierenden Materials (bzw. der zu zentrifugierenden Suspension) in das Innere des Schneckenhauptkörpers auf, welche in der zentralen Öffnung der Ringspaltabdeckung aufgenommen ist, wobei optional die Zuführleitung einen Zuführleitung-Endabschnitt aufweist, welcher sich parallel zur Axialachse erstreckt und mit welchem die Zuführleitung in der zentralen Öffnung der Ringspaltabdeckung aufgenommen ist.

Die Erfindung stellt ferner bereit ein Siebschneckenzentrifuge-System mit einer wie in dieser Anmeldung beschriebenen Siebschneckenzentrifuge und mit einem U- oder V-förmigen Halteteil, das einen ersten Schenkel und einen diesem gegenüberliegenden, zweiten Schenkel hat, die über eine Basis miteinander verbunden sind, wobei an dem ersten Schenkel, optional in einem längsmittleren Abschnitt von diesem, ein Haltestück zur Anbringung an einer Hebeeinrichtung, optional an einer Hebekraneinrichtung, angeordnet ist, und wobei ein Querabstand zwischen den beiden Schenkeln in Richtung quer zur deren Längserstreckung größer ist als ein Radialabstand zwischen einer Innenwandung des Schneckenhauptkörpers und einer Außenfläche der Siebschneckenzentrifuge auf Axialhöhe des Schneckenhauptkörpers, sodass der zweite Schenkel vom zweiten Schneckenhauptkörper-Axialendabschnitt her axial in das Innere der Schneckenhauptkörpers eingreifen kann und zugleich der erste Schenkel die Siebschneckenzentrifuge übergreifen kann, um dadurch den Schneckenhauptkörper für dessen Entnahme aus der Siebschneckenzentrifuge auf dem zweiten Schenkel ablegen zu können.

Die Erfindung stellt ferner bereit ein Verfahren zum Ausbauen eines Schneckenhauptkörpers aus einer wie in dieser Anmeldung beschriebenen Siebschneckenzentrifuge oder aus einer Siebschneckenzentrifuge eines wie in dieser Anmeldung beschriebenen Siebschneckenzentrifuge-Systems, aufweisend
- axiales Einführen eines Werkzeugs in den Schneckenhauptkörper von dessen zweiten Schneckenhauptkörper-Axialendabschnitt her in einen Eingriff mit dem Werkzeugaufnahmeabschnitt des jeweiligen Spannmittels,
- Lösen des jeweiligen Spannmittels mittels des Werkzeugs,
- axiales Entnehmen des Schneckenhauptkörpers von dem einen Ende der Schneckenantriebswelle und aus der Siebschneckenzentrifuge in eine zu dem zweiten Ende der Schneckenantriebswelle entgegengesetzte Richtung,
- wobei optional das Halteteil mit seinem zweiten Schenkel in den Schneckenhauptkörper eingeführt wird, wobei der erste Schenkel die Schneckenzentrifuge übergreift, der Schneckenhauptkörper nach dem Lösen des jeweiligen Spannmittels auf dem zweiten Schenkel abgelegt wird und das Halteteil mit seinem zweiten Schenkel und dem darauf abgelegten Schneckenhauptkörper vom ersten Ende der Schneckenantriebswelle aus axial in Richtung entgegengesetzt zum zweiten Ende der Schneckenantriebswelle bewegt wird und damit der Schneckenhauptkörper axial aus der Siebschneckenzentrifuge entnommen wird.

Die Erfindung wird nachfolgend anhand von Ausführungsbeispielen mit Bezugnahme auf die Zeichnung erläutert. Diese Ausführungsbeispiele sollen die Erfindung nicht einschränken, sondern dem Fachmann nur Möglichkeiten erläutern, wie die Erfindung ausgeführt werden kann. In der Zeichnung werden über deren sämtliche Figuren hinweg für gleiche Bauteile die gleichen Bezugszeichen verwendet. In der Zeichnung zeigen:
Fig. 1 eine schematische Längsschnittansicht einer Siebschneckenzentrifuge gemäß einer Ausführungsform der Erfindung,
Fig. 2 eine schematische Längsschnittansicht einer Siebschneckenzentrifuge mit ausgebautem Schneckenhauptkörper gemäß einer Ausführungsform der Erfindung,
Fig. 3 eine perspektivische Explosionsansicht von Bauteilen, die einen Schneckengesamtkörper ausmachen, in Verbindung mit einer Schnecken-Nabe der Siebschneckenzentrifuge von Fig. 1,
Fig. 4 eine schematische Längsschnittansicht einer Siebschneckenzentrifuge gemäß einer anderen Ausführungsform der Erfindung,
Fig. 5 eine vergrößerte Ansicht von Detail A aus Fig. 4,
Fig. 6 eine Ansicht entlang der in Fig. 5 mit C-C bezeichneten Linie,
Fig. 7 eine schematische Längsschnittansicht einer Siebschneckenzentrifuge gemäß einer noch anderen Ausführungsform der Erfindung,
Fig. 8 eine vergrößerte Ansicht von Detail B aus Fig. 4, und
Fig. 9 eine Ansicht entlang der in Fig. 5 mit D-D bezeichneten Linie.

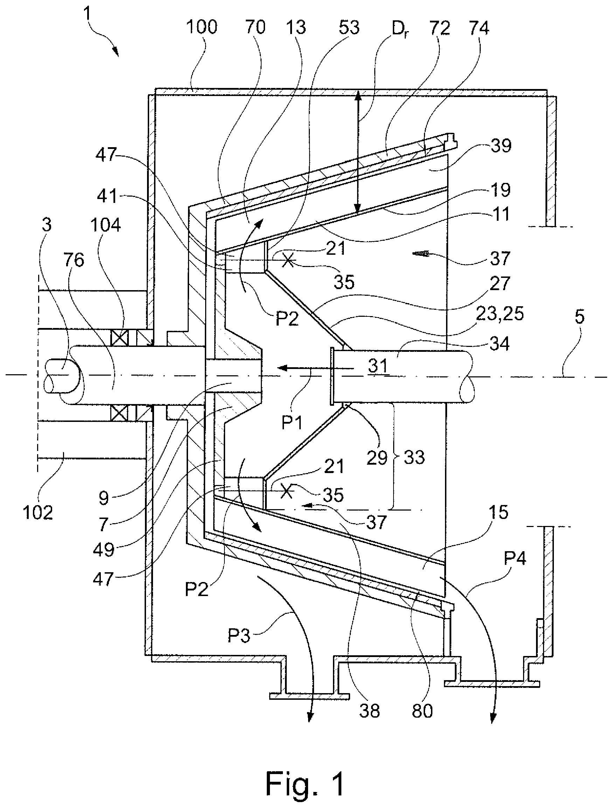

Gemäß den Ausführungsformen von Figuren 1 bis 3 weist eine Siebschneckenzentrifuge 1 auf: eine Schneckenantriebswelle 3, welche sich entlang einer Axialachse 5 erstreckt, eine Schnecken-Nabe 7, welche an einem (z.B. einem ersten) Axialende 9 der Schneckenantriebswelle 3 befestigt, optional lösbar befestigt, ist, einen hohlen Schneckenhauptkörper 11, welcher einen ersten Schneckenhauptkörper-Axialendabschnitt 13 und einen zweiten Schneckenhauptkörper-Axialendabschnitt 15 hat und welcher sich axial entlang der Axialachse 5 von seinem erstem 13 zu seinem zweiten Schneckenhauptkörper-Axialendabschnitt 15 in Richtung entgegengesetzt zu einem zweiten Axialende 17 der Schneckenantriebswelle 3 (bzgl. des einen Axialendes 9) erstreckt und welcher eine sich um die Axialachse 5 herum erstreckende Schneckenhauptkörper-Umfangswand 19 aufweist, wobei der hohle Schneckenhauptkörper 11 an seinem ersten Schneckenhauptkörper-Axialendabschnitt 13 an der Schnecken-Nabe 7 lösbar befestigt ist mittels wenigstens eines Spannmittels 21 (hier mittels mehrerer Spannmittel 21) von welchem/welchen der Schneckenhauptkörper 11 und die Schnecken-Nabe 7 gegeneinander verspannt (hier axial gegeneinander verspannt) sind, eine ringförmige Ringspaltabdeckung 23 (hier in Form eines als Füllverteiler ausgestalteten/dienenden Abdeckungskörpers 25 mit konischer Umfangswand 27), welche eine zentrale Öffnung 29 hat zur Aufnahme einer Zuführleitung (z.B. eines Füllrohrs bzw. einer Füllleitung) 31 zum Zuführen von zu zentrifugierendem Material (z.B. einer zu zentrifugierenden Suspension) in Richtung des Pfeils P1 in das Innere des Schneckenhauptkörpers 11 und welche sich (z.B. radial) von der Schneckenhauptkörper-Umfangswand 19 bis zur zentralen Öffnung 29 erstreckt, um bei in die Öffnung 29 eingesetzter Zuführleitung 31 einen Ringspalt 33 zwischen der aufgenommenen Zuführleitung 31 und der Schneckenhauptkörper-Umfangswand 19 abzudecken. Die Zuführleitung 31 ist z.B. mit einem Zuführleitung-Endabschnitt 34 in die zentrale Öffnung 29 eingesetzt. Das jeweilige Spannmittel 21 hat einen dem zweiten Schneckenhauptkörper-Axialendabschnitt 15 zugewandten Werkzeugeingriffsabschnitt 35, und radial zwischen der Schneckenhauptkörper-Umfangswand 19 und der Ringspaltabdeckung 23 ist ein Axialzugangskanal 37 ausgebildet, über welchen der Werkzeugeingriffsabschnitt 35 des jeweiligen Spannmittels 21 vom zweiten Schneckenhauptkörper-Axialendabschnitt 15 her axial zugänglich ist. Der Axialzugangskanal 37 hat eine Axialzugangsöffnung 38, die radial zwischen der Ringspaltabdeckung 23 und der Schneckenhauptkörper-Umfangswand angeordnet ist und die axial dem zweiten Schneckenhauptkörper-Axialendabschnitt 15 zugewandt ist und die radial komplett mit dem jeweiligen Werkzeugeingriffsabschnitt 35 überlappt.

Der Schneckenhauptkörper 11 ist an seiner radial äußeren Seite (bzw. Außenseite) mit einer Schneckenwendel 39 versehen. Ferner ist der Schneckenhauptkörper 11 in Form eines hohlen Schneckenkonus ausgebildet, wobei der erste Axialendabschnitt 13 ein Kleindurchmesser-Axialendabschnitt des Schneckenkonus ist und der zweite Axialendabschnitt 15 ein Großdurchmesser-Endabschnitt des Schneckenkonus ist.

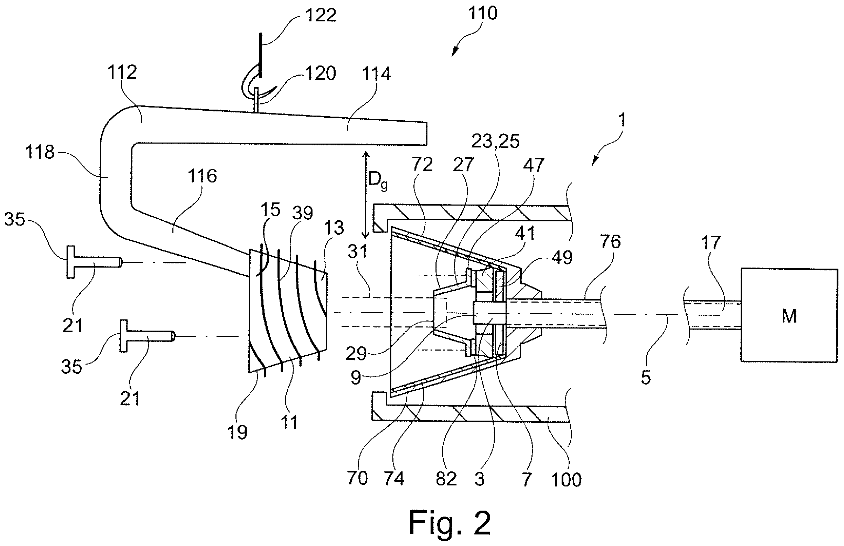

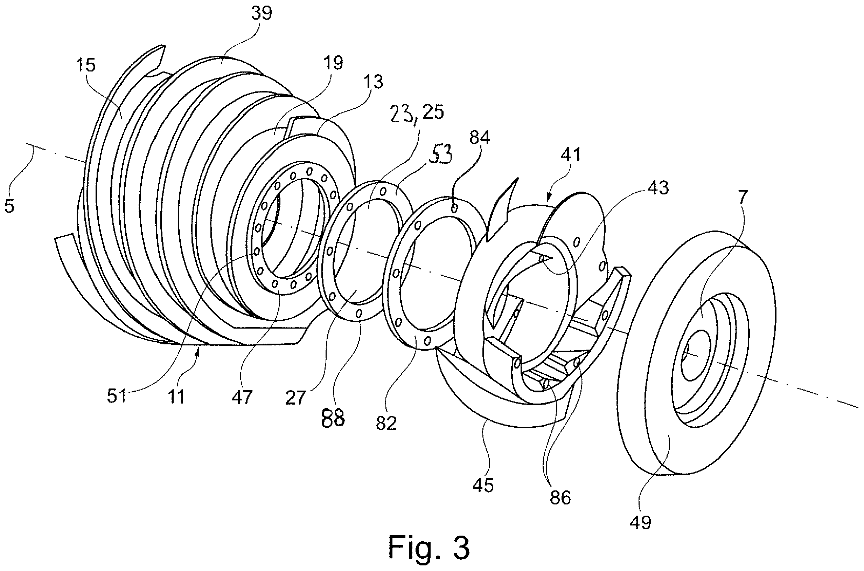

Die Siebschneckenzentrifuge 1 weist ein separates, ringförmiges Materialzuführ-Leitbauteil (z.B. auch Fülllaterne genannt) 41 auf, welches z.B. Material-Leitfinnen 43 aufweist, welches sich rings um die Axialachse 5 herum erstreckt und welches dazu eingerichtet ist, um das durch die zentrale Öffnung 29 hindurch gelangende, zu zentrifugierende Material zur Außenseite des Schneckenhauptkörpers 11 zu leiten (siehe Pfeil P2 in Fig. 2). Bei der Ausführungsform von Figuren 2 und 3 ist das Materialzuführ-Leitbauteil 41 axial zwischen den Schneckenhauptkörper 11 und die Schnecken-Nabe 7 gesetzt ist und mittels des jeweiligen als Axialspannmittel vorgesehenen Spannmittels 21 zusammen mit dem Schneckenhauptkörper 11 und der Schnecken-Nabe 7 axial verspannt. Ferner weist bei der Ausführungsform von Figuren 2 und 3 das Materialzuführ-Leitbauteil 41 an seiner Außenseite ebenfalls einen Schneckenwendelabschnitt 45 auf, der im Zusammenbauzustand mit der Schneckenwendel 39 des Schneckenhauptkörpers 11 zusammenpasst, sodass eine Gesamtschneckenwendel gebildet ist. Das Materialzuführ-Leitbauteil 41 bildet damit zusammen mit dem Schneckenhauptkörper 11 insgesamt einen hohlen Schneckengesamtkörper aus. Die Material-Leitfinnen 43 können ferner als Radialbeschleuniger fungieren und/oder als solcher ausgebildet sein, mittels dessen das zu zentrifugierende Material radial von innen nach außen zur Außenseite des Schneckenhauptkörpers 11 bzw. des Schneckengesamtkörpers beschleunigt wird. Hierzu sind die Material-Leitfinnen 43 z.B. in Form von Pumpenradschaufeln bzw. Pumpenradflügen ausgebildet.

Bei den Ausführungsformen von Figuren 1 bis 3 ist von und/oder an der Schneckenhauptkörper-Umfangswand 19 am ersten Axialendabschnitt 13 des Schneckenhauptkörpers 11 ein Schneckenhauptkörperringflansch 47 ausgebildet ist, der sich rings um die Axialachse 5 herum sowie radial nach innen erstreckt und über welchen der Schneckenhauptkörper 11 an seinem ersten Axialendabschnitt 13 an einem Nabenringflansch 49 der Schnecken-Nabe 7, der sich rings um die Axialachse 5 herum sowie radial nach außen erstreckt, lösbar befestigt ist (mittels des jeweiligen Spannmittels 21), wobei der Schneckenhauptkörperringflansch 47 und der Nabenringflansch 49 axial hintereinander gesetzt und durch das jeweilige als Axialspannmittel fungierende Spannmittel 21 axial miteinander verspannt sind. Bei der Ausführungsform von Figur 1 ist z.B. der Schneckenhauptkörper 11 und das Materialzuführ-Leitbauteil 41 als ein einziges Bauteil, z.B. via Verschweißung, ausgebildet, wobei das Materialzuführ-Leitbauteil 41 zugleich den Schneckenkörperringflansch 47 bildet.

Das jeweilige Spannmittel 21 ist z.B. als Schraube ausgebildet, und in der Schnecken-Nabe 7 (z.B. in dem Nabenringflansch 49) sind jeweilige Gewindelöcher ausgebildet, in welche die Spannmittel 21 einschraubbar sind, um dadurch den Schneckenkörper 11 lösbar an die Schnecken-Nabe 7 schrauben zu können. Hierzu sind im Schneckenhauptkörperringflansch 47 eine der Anzahl der Spannmittel 21 entsprechende Anzahl an ersten Körperdurchgangslöchern 51 ausgebildet, durch welche sich die Spannmittel 21 axial erstrecken.

Bei den Ausführungsformen von Figuren 1 bis 3 weist die Ringspaltabdeckung 23 und damit hier der als Füllverteiler ausgestaltete/dienende Abdeckungskörper 25 einen Abdeckungsringflansch (bzw. Füllverteilerringflansch) 53 auf, der sich rings um die Axialachse 5 herum erstreckt, wobei der Abdeckungsringflansch 53 axial an den Schneckenhauptkörperringflansch 47 unmittelbar angesetzt ist und axial an den Nabenringflansch 49 angesetzt ist, wobei der Abdeckungsringflansch 53 damit axial zwischen den Schneckenhauptkörperringflansch 47 und den Nabenringflansch 49 gesetzt ist. Ferner ist der Abdeckungsringflansch 53, im Zusammenbauzustand, zusammen mit dem Schneckenhauptkörperringflansch 47 und dem Nabenringflansch 49 mittels des jeweiligen Axialspannmittels 21 axial verspannt.

Die Siebschneckenzentrifuge 1 gemäß den Ausführungsformen von Figuren 1 bis 3 weist ferner auf eine, hier konisch ausgebildete, Siebtrommel 70, welche eine Siebtrommelumfangswand 72 aufweist, von welcher der Schneckenhauptkörper 11 rings der Axialachse 5 umgeben ist und welche auf ihrer radial inneren Seite mit einem Siebmittel 74, z.B. einem Siebnetz, ausgestattet ist. Die Siebtrommel 70 ist drehfest an einer Trommelantriebswelle 76 angebracht und mittels dieser drehbar. Die Trommelantriebswelle 76 ist als Hohlwelle ausgebildet und koaxial um die Schneckenantriebswelle 3 herum angeordnet. Zum Drehen der Trommelantriebswelle 76 und zum Drehen der Schneckenantriebswelle 3 sind diese mit einer Motoreinrichtung M verbunden, welche z.B. für jede der Antriebswellen 3, 76 einen jeweils zugeordneten Elektromotor (nicht gezeigt) aufweist, der über einen Riementrieb mit der zugeordneten Antriebswelle 3, 76 verbunden ist.

Im Filtrationsbetrieb wird das entlang des Pfeils P2 auf die Außenseite des Schneckenhauptkörpers 11 geführte Material (z.B. die Suspension) mittels des Filtermittels 74 getrennt in ein Filtrat, das durch das Filtermittel 74 hindurchgelangt und entlang des Pfeils P3 (z.B. über einen Filtrat-Abführstutzen) abgeführt wird, und in einen auf dem/am Filtermaterial 74 verbleibenden Feststoff, der mittels der Schneckenwendel 39 axial weiter in Richtung des zweiten Schneckenhauptkörper-Axialendabschnitts 15 gefördert wird, um dort herunterzufallen und entlang des Pfeils P4 abgeführt zu werden.

Um einen Radialspalt 80 zwischen der konisch geformten Siebtrommel 70 und dem konisch geformten Schneckenhauptkörper 11 einzustellen, ist die Siebschneckenzentrifuge 1 gemäß der Ausführungsform von Figuren 2 und 3 mit einer Einstellringscheibe (bzw. einem Distanzring) 82 ausgestattet, welche sich rings um die Axialachse 5 herum erstreckt und welche axial zwischen den Schneckenhauptkörper 11 und die Schnecken-Nabe 7 gesetzt ist. Genauer ist die Einstellringscheibe 82 hier unmittelbar zwischen den Abdeckungsringflansch 53 und das Materialzuführ-Leitbauteil 41 gesetzt. Bei der Ausführungsform von Fig. 1 ist noch keine solche Einstellringscheibe 82 eingesetzt, aber eine solche Einstellringscheibe 82 kann in der Ausführungsform von Fig. 1 bei Bedarf z.B. zwischen die Schneckennabe 7 und das Materialzuführ-Bauteil 41 axial zwischengesetzt werden/sein.

Bei der Ausführungsform von Figuren 2 und 3 sind die Schnecken-Nabe 7, das Materialzuführ-Leitbauteil 41, die Einstellringscheibe 82, die hier als Abdeckungskörper 25, der als Füllverteiler ausgestaltet ist/dient, ausgebildete Ringspaltabdeckung 23 und der Schneckenhauptkörper 11 als (z.B. voneinander) separate Bauteile ausgebildet, welche in dieser genannten Reihenfolge unmittelbar aneinandergesetzt sind. Die Einstellringscheibe 82 und das Materialzuführ-Leitbauteil 41 sind jeweils mit einer der Anzahl an Spannmitteln 21 entsprechenden Anzahl an Scheibendurchgangslöchern 84 bzw. Leitbauteildurchgangslöchern 86 versehen, und die Spannmittel 21 erstrecken sich durch die Körperdurchgangslöcher 51, die Scheibendurchgangslöcher 84, die Leitbauteildurchgangslöcher 86 in die in der Schnecken-Nabe 7 (bzw. in deren Nabenringflansch 49) ausgebildeten (nicht gezeigten) Gewindelöcher, um so diese vorstehend genannten Bauteile axial aneinander zu befestigen bzw. axial miteinander zu verspannen. Der hierdurch erlangte Verbund aus dem Materialzuführ-Leitbauteil 41, der Einstellringscheibe 82, der Ringspaltabdeckung 23, die hier als Abdeckungskörper 25, der als Füllverteiler ausgebildet ist/dient, ausgebildete ist, und dem Schneckenhauptkörper 11 kann z.B. als Schneckengesamtkörper angesehen werden, der mittels der Spannmittel 21 an der Schnecken-Nabe befestigt ist.

Durch Wahl der Dicke der Einstellringscheibe 82 kann die Größe des Radialspalts 80 eingestellt werden.

Alternativ zu der vorstehend erläuterten separaten Ausbildung der in Fig. 3 gezeigten Bauteile, kann z.B. der Schneckenhauptkörper 11 und das Materialzuführ-Bauteil 41 als ein Stück ausgebildet sein und die Ringspaltabdeckung 23 (z.B. der die Ringspaltabdeckung 23 darstellenden Abdeckungskörper 25) (dazu) separat ausgebildet sein, oder die Ringspaltabdeckung 23 (z.B. der die Ringspaltabdeckung 23 darstellende Abdeckungskörper 25) kann mit dem Materialzuführ-Bauteil 41 als ein Stück ausgebildet sein. Ferner kann z.B. die Ringspaltabdeckung 23 vom Abdeckungskörper (bzw. vom Füllverteiler) 25 und dem Materialzuführ-Bauteil 41 gemeinsam ausgebildet sein.

Die Siebschneckenzentrifuge 1 gemäß den Ausführungsformen von Figuren 1 bis 3 weist ferner z.B. auf ein Aufnahmegehäuse 100, in welchem, im Zusammenbauzustand, die Siebtrommel 70 und der an der Schneckennabe 7 angebrachte Schneckengesamtkörper untergebracht sind, und einen Maschinenrahmen 102 (siehe Figur 1), an welchem das Aufnahmegehäuse 100 angebracht ist und von welchem die Trommelantriebswelle 76 und die Schneckenantriebswelle 3 über Drehlager 104 (siehe Fig. 1) gelagert sind.

Fig. 2 zeigt ferner ein Siebschneckenzentrifuge-System 110 mit der wie vorstehend beschriebenen Siebschneckenzentrifuge 1 und mit einem U- oder V-förmigen Halteteil 112, das einen ersten Schenkel 114 und einen diesem gegenüberliegenden, zweiten Schenkel 116 hat, die über eine Basis 118 miteinander verbunden sind, wobei an dem ersten Schenkel 114, in einem längsmittleren Abschnitt von diesem, ein Haltestück 120, z.B. in Form eines Halterings, zur Anbringung an einer Hebeeinrichtung 122, hier z.B. in Form einer Hebekraneinrichtung, angeordnet ist. Ein Querabstand Dq zwischen den beiden Schenkeln 114, 116 in Richtung quer zur deren Längserstreckung ist größer (z.B. ist derart größer) als ein Radialabstand Dr zwischen einer Innenwandung des Schneckenhauptkörpers 11 und einer Außenfläche der Siebschneckenzentrifuge 1 auf Axialhöhe des Schneckenhauptkörpers 1 (siehe Fig. 1), sodass (z.B. dass) der zweite Schenkel 116 vom zweiten Schneckenhauptkörper-Endabschnitt 15 her axial in das Innere der Schneckenhauptkörpers 11 eingreifen kann und zugleich der erste Schenkel 114 die Siebschneckenzentrifuge 1 übergreifen kann, um dadurch den Schneckenhauptkörper 11 für dessen Entnahme aus der Siebschneckenzentrifuge 1 auf dem zweiten Schenkel 116 ablegen zu können.

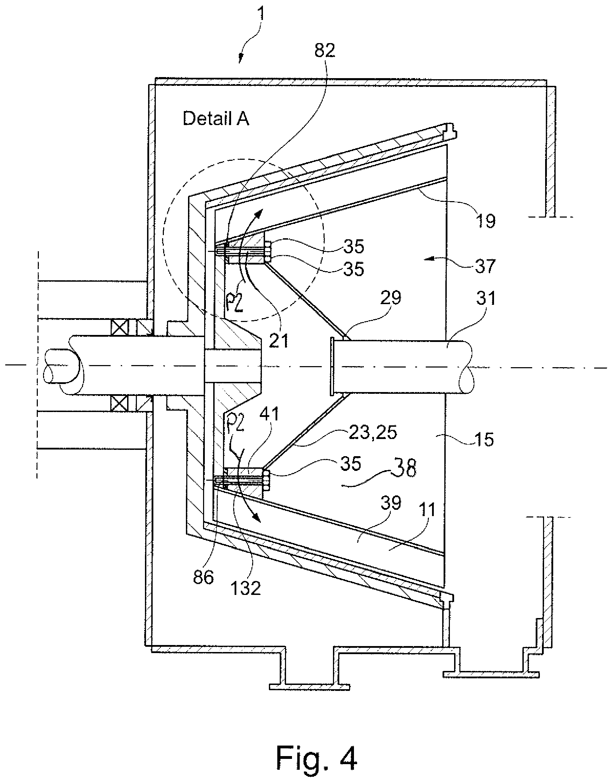

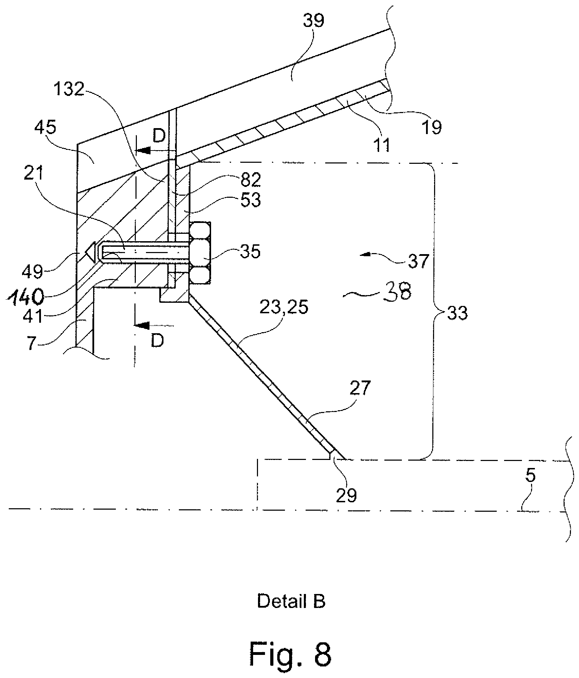

Die Figuren 4-9 zeigen weitere Ausführungsformen einer Siebschneckenzentrifuge 1 gemäß der Erfindung, wobei die Siebschneckenzentrifuge 1 gemäß dieser weiteren Ausführungsformen im Wesentlichen wie die Siebschneckenzentrifugen 1 gemäß den Ausführungsformen von Figuren 1 bis 3 ausgebildet ist, sodass im Folgenden vor allem nur die Unterschiede zu diesen vorigen Ausführungsformen beschrieben werden.

Bei der Ausführungsform von Figuren 4 bis 6 sind der Schneckenhauptkörper 11, das Materialzuführ-Bauteil 41, der Abdeckungskörper (bzw. der Füllverteiler) 25, welcher mit der konischen Umfangswand 27 ausgestattet ist, als eine fest zusammenhängende, nicht trennbare Baueinheit ausgebildet, wobei z.B. der Schneckenhauptkörper 11 das Materialzuführ-Bauteil 41 radial außen überdeckt, wobei z.B. der Schneckenhauptkörper 11 und das Materialzuführ-Bauteil 41 aneinandergeschweißt sind und wobei z.B. der Abdeckungskörper (bzw. der Füllverteiler) 25 an das Materialzuführ-Bauteil 41 geschweißt oder mit diesem als stofflich ein Stück hergestellt (z.B. gegossen) ist.

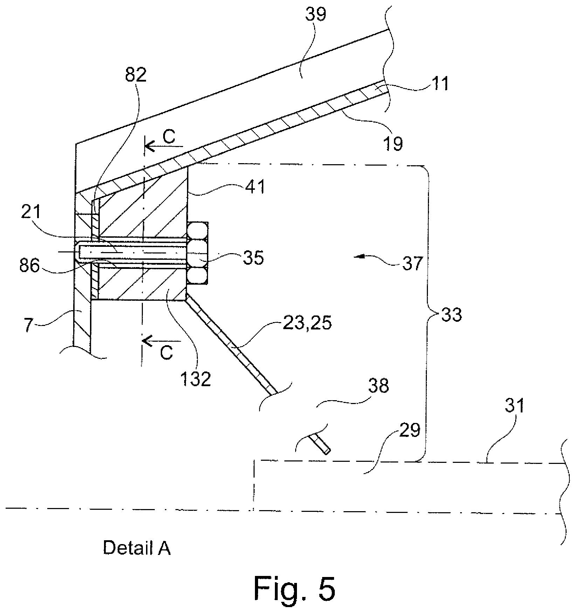

Bei dieser Ausführungsform von Figuren 4 bis 6 wird die Ringspaltabdeckung 23 von dem Abdeckungskörper (bzw. dem Füllverteiler) 25 gemeinsam mit dem Materialzuführ-Bauteil 41 gebildet, welche zusammen den Ringspalt 33 zwischen einer/der in die Öffnung 29 eingesetzten Materialzuführleitung 31 und der Schneckenhauptkörper-Umfangswand 19 axial abdeckt. Das jeweilige Spannmittel 21 ist als Kopfschraube ausgebildet, und der jeweilige Werkzeugeingriffsabschnitt 35 befindet sich am Kopf der Kopfschraube und ist z.B. als Außensechskant (wie in Fig. 5 gezeigt) oder als Inbussechskant ausgebildet.

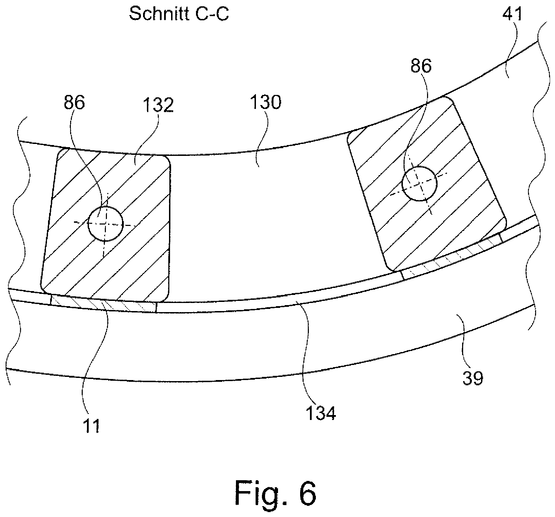

Das Materialzuführ-Bauteil 41 ist als ein Ringbauteil ausgebildet, und, wie aus der in Fig. 6 gezeigten Schnittansicht durch das Materialzuführ-Bauteil (z.B. durch die Fülllaterne) 41 ersichtlich ist, sind in dem Materialzuführ-Bauteil (und damit in dem Ringbauteil) 41 radiale Durchbrüche 130 ausgebildet, welche umfänglich im Abstand, z.B. in regelmäßigen Abständen, voneinander angeordnet sind und von zwischengeordneten Stegen 132 des Materialzuführ-Bauteils 41 begrenzt sind. Im sich, bei dieser Ausführungsform, radial darüber erstreckenden Schneckenhauptkörper 11 sind radiale Körperdurchbrüche 134 ausgebildet, welche sich z.B. zwischen den Wänden der Schneckenwendel 39 erstrecken und welche radial zu den Durchbrüchen 130 im Materialzuführ-Bauteil 41 fluchten, sodass das zu zentrifugierende Material (bzw. die zu zentrifugierende Suspension) von innerhalb nach außerhalb des Schneckenhauptkörpers 11 gelangen kann. In den Stegen 132 sind z.B. die Leitbauteildurchgangslöcher 86 ausgebildet, durch welche sich die Spannmittel 21 axial hindurcherstrecken bzw. hindurcherstrecken können.

Die Einstellringscheibe 82 befindet sich zwischen der Schnecken-Nabe 7 und dem Materialzuführ-Bauteil 41.

Der Axialzugangskanal 37 mit seiner dem zweiten Schneckenkörper-Axialendabschnitt zugewandten Axialzugangsöffnung 38 ist radial zwischen der Schneckenhauptkörper-Umfangswand 19 und der Ringspaltabdeckung 23 als durchgehender Ringkanal ausgebildet, sodass der Werkzeugeingriffsabschnitt 35 des jeweiligen Spannmittels 21 vom zweiten Schneckenhauptkörper-Axialendabschnitt 15 her axial zugänglich ist.

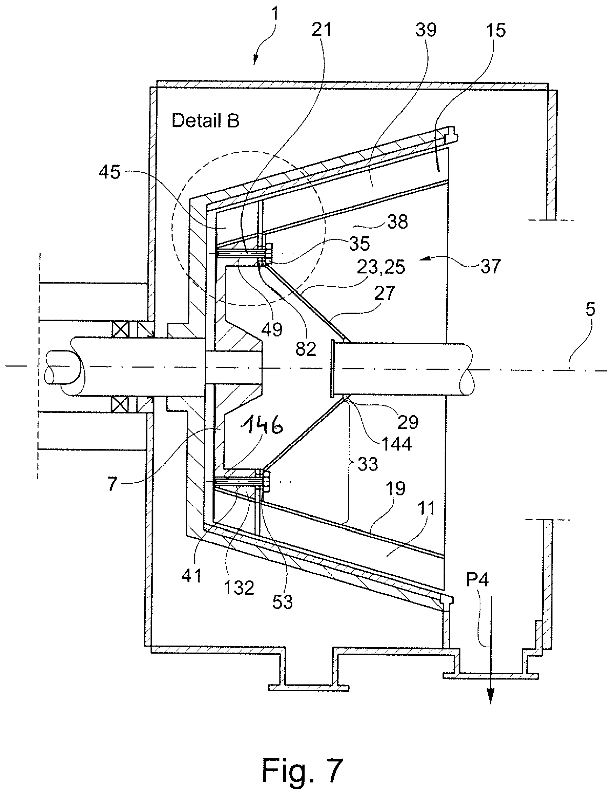

Bei der Ausführungsform von Figuren 7 bis 9 sind die Schnecken-Nabe 7 und das Materialzuführ-Bauteil 41 stofflich einstückig als ein Bauteil bzw. in einem Stück hergestellt (z.B. gegossen) oder aneinandergeschweißt, und sind der Schneckenhauptkörper 11 und die Ringspaltabdeckung 23 stofflich einstückig als ein Bauteil bzw. in einem Stück hergestellt (z.B. gegossen) oder aneinandergeschweißt. Die Ringspaltabdeckung 23 ist als Abdeckungskörper (der einen Füllverteiler darstellt) 25, welcher mit konischer Umfangswand 27 ausgestattet ist, ausgebildet, wobei sich einstückig von dieser konischen Umfangswand 27 aus radial nach außen ein Abdeckungsringflansch 53 erstreckt, welcher einstückig (z.B. stofflich in einem Stück gegossen oder angeschweißt) an den Schneckenhauptkörper 11 angeschlossen ist.

In dieser Ausführungsform bildet das Materialzuführ-Bauteil 41 zugleich den Nabenringflansch 49 der Schneckennabe 7 aus, in welchem Gewindelöcher 140 ausgebildet sind, in welche die als Schrauben ausgebildeten Spannmittel 21 axial einschraubbar sind.

Ferner erstreckt sich bei dieser Ausführungsform gemäß Figuren den 7 bis 9 die Ringspaltabdeckung 23 einstückig von der Schneckenhauptkörper-Umfangswand 19 des Schneckenhauptkörpers 11 aus radial nach innen bis zu der Öffnung 29, womit bei dieser Ausführungsform (wie z.B. auch bei der Ausführungsform von Figuren 2 und 3) die Ringspaltabdeckung 23 komplett von dem Abdeckungskörper (bzw. dem Füllverteiler) 25 gebildet wird.

Der Ringspalt 33 zwischen einem/dem die Öffnung 29 begrenzenden, dem zweiten Schneckenhauptkörper-Axialendabschnitt 15 zugewandten Axialende 144 der Ringspaltabdeckung 23 (bzw. hier des Abdeckungskörpers (bzw. des Füllverteilers) 25) und der Schneckenhauptkörper-Umfangswand 19 des Schneckenhauptkörpers 11 dient als oder bildet zugleich der/den Axialzugangskanal 37 oder zumindest ein/einen Teil des Axialzugangskanals 37, über welchen der jeweilige Werkzeugeingriffsabschnitt 35 von dem zweiten Schneckenhauptkörper-Axialendabschnitt 15 her (z.B. frei) zugänglich ist und welcher seine Axialzugangsöffnung 38 radial zwischen der Ringspaltabdeckung 23 und der Schneckenhauptkörper-Umfangswand 19 hat.

Ferner ist bei dieser Ausführungsform gemäß Figuren 7 bis 9, der Schneckengesamtkörper zweigeteilt, wobei ein erster Teil des Schneckengesamtkörpers vom Schneckenhauptkörper 11 gebildet wird, der hierzu auf seiner radial äußeren Fläche mit der Schneckenwendel 39 versehen ist, und wobei ein zweiter Teil des Schneckengesamtkörpers vom Materialzuführ-Bauteil 41 gebildet wird, welches hierzu auf seiner radial äußeren Fläche mit einem Schneckenwendelabschnitt 45 versehen ist, welcher, im Zusammenbauzustand, mit der Schneckenwendel 39 des Schneckenhauptkörpers 11 zusammenpasst unter Ausbildung einer Gesamtschneckenwendel 39, 45.

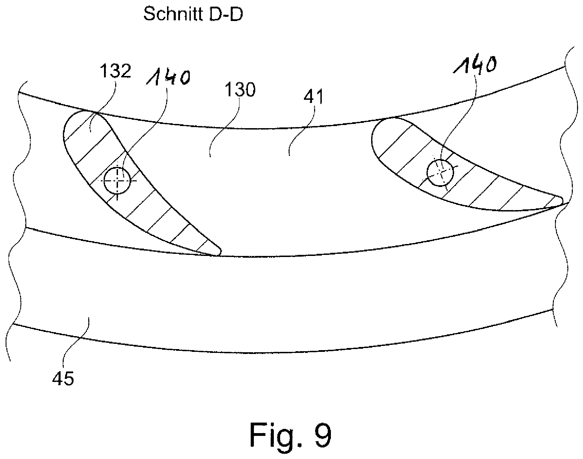

Das Materialzuführ-Bauteil 41 als ein Ringbauteil ausgebildet, und, wie aus der in Fig. 9 gezeigten Schnittansicht durch das Materialzuführ-Bauteil (z.B. durch die Fülllaterne) 41 ersichtlich ist, sind in dem Materialzuführ-Bauteil (und damit in dem Ringbauteil) 41 radiale Durchbrüche 130 ausgebildet, welche umfänglich im Abstand, z.B. in regelmäßigen Abständen, voneinander angeordnet sind und von zwischengeordneten Stegen 132 des Materialzuführ-Bauteils 41 begrenzt sind. Die Stege 132 sind hier als Material-Beschleunigungsschaufeln (z.B. in Form von Pumpenradschaufeln bzw. Pumpenradflügeln) ausgebildet, sodass das durch die Durchbrüche 130 radial nach außen geförderte Material (bzw. die durch die Durchbrüche 130 radial nach außen geförderte Suspension) besser radialförderbar ist. Die Stege 132 stellen hier damit auch Material-Leitfinnen dar, die jenen Material-Leitfinnen 43 der Ausführungsformen von Figuren 1 bis 3 entsprechen oder entsprechen können. Radial außen am Materialzuführ-Bauteil 41 wird das zu zentrifugierende Material dann anhand des um die Axialachse 5 mitgedrehten Schneckenwendelabschnitts 45 axial zu dem Schneckenhauptkörper 11 gefördert, von dessen Schneckenwendel 39 es dann weiter axial in Richtung zum zweiten Schneckenkörper-Axialendabschnitt 15 gefördert wird, um dort via Schwerkraft nach unten zu fallen und in Richtung des Pfeils P4 aus der Schneckenzentrifuge 1 abgeführt zu werden (z.B. über einen Feststoff-Abführstutzen).

In den Stegen 132 sind die Leitbauteildurchgangslöcher 86 ausgebildet, durch welche sich die Spannmittel 21 axial hindurcherstrecken bzw. hindurcherstrecken können.

Die Einstellringscheibe 82 befindet sich zwischen dem mit der Schnecken-Nabe 7 stofflich einstückig ausgebildeten Materialzuführ-Bauteil 41 und der Ringspaltabdeckung 23 (bzw. dem als Füllverteiler ausgestalteten Abdeckungskörper 25 bzw. dem Abdeckungsringflansch 53).

### Bezugszeichenliste

- 1: Schneckenzentrifuge
- 3: Schneckenantriebswelle
- 5: Axialachse
- 7: Schnecken-Nabe
- 9: Axialende
- 11: Schneckenhauptkörper
- 13: erster Schneckenhauptkörper-Axialendabschnitt
- 15: zweiter Schneckenhauptkörper-Axialendabschnitt
- 17: zweites Axialende
- 19: Schneckenhauptkörper-Umfangswand
- 21: Spannmittel
- 23: Ringspaltabdeckung
- 25: Abdeckungskörper
- 27: konische Umfangswand
- 29: zentrale Öffnung
- 31: Zuführleitung
- 33: Ringspalt
- 34: Zuführleitung-Endabschnitt
- 35: Werkzeugeingriffsabschnitt
- 37: Axialzugangskanal
- 38: Axialzugangsöffnung
- 39: Schneckenwendel
- 41: Materialzuführ-Leitbauteil
- 43: Material-Leitfinnen
- 45: Schneckenwendelabschnitt
- 47: Schneckenhauptkörperringflansch
- 49: Nabenringflansch
- 51: Körperdurchgangslöcher
- 53: Abdeckungsringflansch
- 70: Siebtrommel
- 72: Siebtrommelumfangswand
- 74: Siebmittel
- 76: Trommelantriebswelle
- 80: Radialspalt
- 82: Einstellringscheibe
- 84: Scheibendurchgangslöcher
- 86: Leitbauteildurchgangslöcher
- 100: Aufnahmegehäuse
- 102: Maschinenrahmen
- 104: Drehlager
- 110: Siebschneckenzentrifuge-System
- 112: Halteteil
- 114: erster Schenkel
- 116: zweiter Schenkel
- 118: Basis
- 120: Haltestück
- 122: Hebeeinrichtung
- 130: radiale Durchbrüche
- 132: Stege
- 134: Körperdurchbrüche
- 140: Gewindelöcher
- 144: Axialende der Ringspaltabdeckung

## Patentansprüche

1. Siebschneckenzentrifuge (1), aufweisend
eine Schneckenantriebswelle (3), welche sich entlang einer Axialachse (5) erstreckt,
eine Schnecken-Nabe (7), welche an einem Axialende (9) der Schneckenantriebswelle (3) befestigt ist,
einen hohlen Schneckenhauptkörper (11), welcher einen ersten Schneckenhauptkörper-Axialendabschnitt (13) und einen zweiten Schneckenhauptkörper-Axialendabschnitt (15) hat und welcher sich axial entlang der Axialachse (5) von seinem ersten (13) zu seinem zweiten (15) Schneckenhauptkörper-Axialendabschnitt in Richtung entgegengesetzt zu einem zweiten Axialende (17) der Schneckenantriebswelle (3) erstreckt und welcher eine sich um die Axialachse (5) herum erstreckende Schneckenhauptkörper-Umfangswand (19) aufweist, wobei der hohle Schneckenhauptkörper (11) an seinem ersten Schneckenhauptkörper-Axialendabschnitt (13) an der Schnecken-Nabe (7) lösbar befestigt ist mittels wenigstens eines Spannmittels (21), von welchem der Schneckenhauptkörper (11) und die Schnecken-Nabe (7) gegeneinander verspannt sind,
eine ringförmige Ringspaltabdeckung (23), welche eine zentrale Öffnung (29) hat zur Aufnahme einer Zuführleitung (31) zum Zuführen von zu zentrifugierendem Material in das Innere des Schneckenhauptkörpers (11) und welche sich von der Schneckenhauptkörper-Umfangswand (19) bis zur zentralen Öffnung (29) erstreckt, um bei in die Öffnung (29) eingesetzter Zuführleitung (31) einen Ringspalt (33) zwischen der aufgenommenen Zuführleitung (31) und der Schneckenhauptkörper-Umfangswand (19) abzudecken,
wobei das wenigstens eine Spannmittel (21) einen dem zweiten Schneckenhauptkörper-Axialendabschnitt (15) zugewandten Werkzeugeingriffsabschnitt (35) hat, und
wobei radial zwischen der Schneckenhauptkörper-Umfangswand (19) und der Ringspaltabdeckung (23) wenigstens ein Axialzugangskanal (37) ausgebildet ist, über welchen der Werkzeugeingriffsabschnitt (35) des jeweiligen Spannmittels (21) vom zweiten Schneckenhauptkörper-Axialendabschnitt (15) her axial zugänglich ist,
wobei der hohle Schneckenhauptkörper (11) in Form eines hohlen Schneckenkonus ist, wobei der erste Schneckenhauptkörper-Axialendabschnitt (13) ein Kleindurchmesser-Axialendabschnitt des Schneckenkonus ist und der zweite Schneckenhauptkörper-Axialendabschnitt (15) ein Großdurchmesser-Endabschnitt des Schneckenkonus ist,
die Siebschneckenzentrifuge (1) ferner mit einer drehbar gelagerten Siebtrommel (70), welche eine Siebtrommelumfangswand (72) aufweist, von welcher der Schneckenhauptkörper (11) rings der Axialachse (5) umgeben ist und welche mit einem Siebmittel (74) ausgestattet ist, **gekennzeichnet durch** eine Einstellringscheibe (82), welche sich rings um die Axialachse (5) herum erstreckt und welche axial zwischen den Schneckenhauptkörper (11) und die Schnecken-Nabe (7) gesetzt ist und mittels welcher ein Radialspalt (80) zwischen dem Schneckenhauptkörper (11) und der Siebtrommelumfangswand (72) einstellbar ist, wobei die Einstellringscheibe (82) mittels des jeweiligen Axialspannmittels zusammen mit dem Schneckenhauptkörper (11) und der Schnecken-Nabe (7) axial verspannt ist.

2. Siebschneckenzentrifuge gemäß Anspruch 1, wobei die Schnecken-Nabe (7) an dem Axialende (9) der Schneckenantriebswelle (3) lösbar befestigt ist.

3. Siebschneckenzentrifuge (1) gemäß Anspruch 1 oder 2, wobei der Axialzugangskanal (37) eine Axialzugangsöffnung (38) hat, die radial zwischen der Ringspaltabdeckung (23) und der Schneckenhauptkörper-Umfangswand (19) angeordnet ist und die axial dem zweiten Schneckenhauptkörper-Axialendabschnitt (15) zugewandt ist und die radial zumindest teilweise mit dem wenigstens einen Werkzeugeingriffsabschnitt (35) überlappt.

4. Siebschneckenzentrifuge (1) gemäß einem der Ansprüche 1 bis 3, wobei das jeweilige Spannmittel (21) als Axialspannmittel ausgebildet ist und der Schneckenhauptkörper (11) und die Schnecken-Nabe (7) axial hintereinander gesetzt, optional axial aneinandergesetzt, und mittels des jeweiligen Axialspannmittels axial miteinander verspannt sind, wobei optional das jeweilige Axialspannmittel als Schraube ausgebildet ist, welche einen Schraubenkopf aufweist, von welchem der jeweilige Werkzeugeingriffsabschnitt (35) gebildet wird.

5. Siebschneckenzentrifuge gemäß Anspruch 4, wobei von und/oder an der Schneckenhauptkörper-Umfangswand (19) am ersten Schneckenhauptkörper-Axialendabschnitt (13) ein Schneckenhauptkörperringflansch (47) ausgebildet ist, der sich rings um die Axialachse (5) herum erstreckt und über welchen der Schneckenhauptkörper (11) an seinem ersten Schneckenhauptkörper-Axialendabschnitt (13) an einem Nabenringflansch (49) der Schnecken-Nabe (7), der sich rings um die Axialachse herum erstreckt, lösbar befestigt ist, wobei der Schneckenhauptkörperringflansch (47) und der Nabenringflansch (49) axial hintereinander gesetzt und durch das jeweilige Axialspannmittel axial miteinander verspannt sind.

6. Siebschneckenzentrifuge (1) gemäß Anspruch 5, wobei der Schneckenhauptkörperringflansch (47) als sich bezüglich der Axialachse (5) radial nach innen erstreckender Schneckenhauptkörperringflansch (47) ausgebildet ist, und wobei der Nabenringflansch (49) als sich bezüglich der Axialachse (5) radial nach außen erstreckender Nabenringflansch (49) ausgebildet ist.

7. Siebschneckenzentrifuge (1) nach einem der Ansprüche 1-6, wobei die Ringspaltabdeckung (23) einen hohlen zylindrischen oder hohlen konischen Abdeckungskörper (25) aufweist, der eine sich um die Axialachse (5) herum erstreckende Abdeckungs-Umfangswand (27) aufweist, wobei der Axialzugangskanal (37) als sich rings um die Axialachse (5) herum radial zwischen der Abdeckungs-Umfangswand (27) und der Schneckenhauptkörper-Umfangswand (19) erstreckender Ringkanal ausgebildet ist.

8. Siebschneckenzentrifuge (1) nach einem der Ansprüche 1-4 oder 6-7, sofern in Kombination mit Anspruch 5, wobei die Ringspaltabdeckung (23) einen Abdeckungsringflansch (53) aufweist, der sich rings um die Axialachse (5) herum erstreckt, wobei der Abdeckungsringflansch (53)
- axial an den Schneckenhauptkörperringflansch (47) und/oder an den Nabenringflansch (49) angesetzt und/oder axial zwischen den Schneckenhauptkörperringflansch (47) und den Nabenringflansch (49) gesetzt ist und
- zusammen mit dem Schneckenhauptkörperringflansch (47) und dem Nabenringflansch (49) mittels des jeweiligen Axialspannmittels (21) axial verspannt ist.

9. Siebschneckenzentrifuge (1) nach einem der Ansprüche 1-8, sofern in Kombination mit Anspruch 5,
wobei die Einstellringscheibe (82) axial zwischen den Schneckenhauptkörperringflansch (11) und den Nabenringflansch (7) gesetzt ist, und/oder
wobei die Einstellringscheibe (82) mittels des jeweiligen Axialspannmittels zusammen mit dem Schneckenhauptkörperringflansch (47) und dem Nabenringflansch (49) axial verspannt ist.

10. Siebschneckenzentrifuge (1) nach einem der Ansprüche 1-9, ferner aufweisend ein separates, ringförmiges Materialzuführ-Leitbauteil (41), welches optional Material-Leitfinnen (43) aufweist, welches sich rings um die Axialachse (5) herum erstreckt und welches dazu eingerichtet ist, um das durch die zentrale Öffnung (29) hindurch gelangende, zu zentrifugierende Material zu einer Außenseite des Schneckenhauptkörpers (11) zu leiten, wobei das Materialzuführ-Leitbauteil (43) axial zwischen den Schneckenhauptkörper (11) und die Schnecken-Nabe (7) gesetzt ist und mittels des jeweiligen Spannmittels (21) zusammen mit dem Schneckenhauptkörper (11) und der Schnecken-Nabe (7) verspannt ist, optional axial verspannt ist.

11. Siebschneckenzentrifuge (1) nach Anspruch 10, wobei das Materialzuführ-Leitbauteil (41)
- sofern in Kombination mit Anspruch 5 zwischen den Schneckenhauptkörperringflansch (47) und den Nabenringflansch (49),
- ferner optional zwischen die Einstellringscheibe (82) und die Schnecken-Nabe (7),
- ferner optional und sofern in Kombination mit Anspruch 5 zwischen die Einstellringscheibe (82) und den Nabenringflansch (49),
- ferner optional und sofern in Kombination mit Anspruch 8 zwischen den Abdeckungsringflansch (53) und die Schnecken-Nabe (7),
- ferner optional und sofern in Kombination mit Ansprüchen 5 und 8 zwischen den Abdeckungsringflansch (53) und den Nabenringflansch (49) gesetzt ist.

12. Siebschneckenzentrifuge (1) gemäß einem der Ansprüche 1 bis 11, ferner aufweisend die Zuführleitung (31) zum Zuführen von zu zentrifugierendem Material in das Innere des Schneckenhauptkörpers (11), welche in der zentralen Öffnung (29) der Ringspaltabdeckung (23) aufgenommen ist, wobei optional die Zuführleitung (31) einen Zuführleitung-Endabschnitt (34) aufweist, welcher sich parallel zur Axialachse (5) erstreckt und mit welchem die Zuführleitung (31) in der zentralen Öffnung (29) der Ringspaltabdeckung (23) aufgenommen ist.

13. Siebschneckenzentrifuge-System (110) mit einer Siebschneckenzentrifuge (1) gemäß einem der vorhergehenden Ansprüche und mit einem U- oder V-förmigen Halteteil (112), das einen ersten Schenkel (114) und einen diesem gegenüberliegenden, zweiten Schenkel (116) hat, die über eine Basis (118) miteinander verbunden sind, wobei an dem ersten Schenkel (114), optional in einem längsmittleren Abschnitt von diesem, ein Haltestück (120) zur Anbringung an einer Hebeeinrichtung (122), optional an einer Hebekraneinrichtung, angeordnet ist, und wobei ein Querabstand (Dq) zwischen den beiden Schenkeln (114, 116) in Richtung quer zur deren Längserstreckung größer ist als ein Radialabstand (Dr) zwischen einer Innenwandung des Schneckenhauptkörpers (11) und einer Außenfläche der Siebschneckenzentrifuge (1) auf Axialhöhe des Schneckenhauptkörpers (11), sodass der zweite Schenkel (116) vom zweiten Schneckenhauptkörper-Endabschnitt (15) her axial in das Innere der Schneckenhauptkörpers (11) eingreifen kann und zugleich der erste Schenkel (114) die Siebschneckenzentrifuge (1) übergreifen kann, um dadurch den Schneckenhauptkörper (11) für dessen Entnahme aus der Siebschneckenzentrifuge (1) auf dem zweiten Schenkel (116) ablegen zu können.

14. Verfahren zum Ausbauen eines Schneckenhauptkörpers (11) aus einer Siebschneckenzentrifuge (1) gemäß einem der Ansprüche 1-12 oder aus einer Siebschneckenzentrifuge (1) eines Siebschneckenzentrifuge-Systems (110) gemäß Anspruch 13, aufweisend
- axiales Einführen eines Werkzeugs in den Schneckenhauptkörper (11) von dessen zweiten Schneckenhauptkörper-Axialendabschnitt (15) her in einen Eingriff mit dem Werkzeugaufnahmeabschnitt (35) des jeweiligen Spannmittels (21),
- Lösen des jeweiligen Spannmittels (21) mittels des Werkzeugs,
- axiales Entnehmen des Schneckenhauptkörpers (11) von dem einen Axialende (9) der Schneckenantriebswelle (3) und aus der Siebschneckenzentrifuge in eine zu dem zweiten Axialende (9) der Schneckenantriebswelle (3) entgegengesetzte Richtung,
- wobei optional und sofern in Kombination mit Anspruch 13 das Halteteil (112) mit seinem zweiten Schenkel (116) in den Schneckenhauptkörper (11) eingeführt wird, wobei der erste Schenkel (114) die Schneckenzentrifuge (1) übergreift, der Schneckenhauptkörper (11) nach dem Lösen des jeweiligen Spannmittels (21) auf dem zweiten Schenkel (116) abgelegt wird und das Halteteil (112) mit seinem zweiten Schenkel (116) und dem darauf abgelegten Schneckenhauptkörper (11) vom ersten Ende der Schneckenantriebswelle (3) aus axial in Richtung entgegengesetzt zum zweiten Axialende (9) der Schneckenantriebswelle (3) bewegt wird und damit der Schneckenhauptkörper (11) axial aus der Siebschneckenzentrifuge (1) entnommen wird.

## Claims

1. Screen-type screw centrifuge (1), comprising:
a screw drive shaft (3) extending along an axial axis (5),
a screw hub (7) fixed to an axial end (9) of the screw drive shaft (3),
a hollow screw main body (11) which has a first screw main body axial end portion (13) and a second screw main body axial end portion (15) and which extends axially along the axial axis (5) from its first (13) to its second (15) screw main body axial end portion in a direction opposite to a second axial end (17) of the screw drive shaft (3) and which comprises a screw main body circumferential wall (19) extending around the axial axis (5), wherein the hollow screw main body (11) is detachably fixed at its first screw main body axial end portion (13) to the screw hub (7) by means of at least one tightening means (21) by which the screw main body (11) and the screw hub (7) are tightened against each other,
a ring-shaped annular-gap cover (23) which has a central opening (29) for receiving a feed line (31) for feeding material to be centrifuged into the interior of the screw main body (11) and which extends from the screw main body circumferential wall (19) to the central opening (29) to cover an annular gap (33) between the received feed line (31) and the screw main body circumferential wall (19) when the feed line (31) is inserted into the opening (29),
wherein the at least one tightening means (21) has a tool engagement portion (35) facing the second screw main body axial end portion (15), and
wherein at least one axial access channel (37) is formed radially between the screw main body circumferential wall (19) and the annular-gap cover (23), through which the tool engagement portion (35) of the respective tightening means (21) is axially accessible from the second screw main body axial end portion (15),
wherein the hollow screw main body (11) is in the form of a hollow screw cone, wherein the first screw main body axial end portion (13) is a small-diameter axial end portion of the screw cone, and the second screw main body axial end portion (15) is a large-diameter end portion of the screw cone,
the screen-type screw centrifuge (1) further having a rotatably supported screen drum (70) comprising a screen drum circumferential wall (72), by which the screw main body (11) is surrounded around the axial axis (5) and which is equipped with a screen means (74), **characterized by** an adjusting ring disk (82) which extends around the axial axis (5) and which is axially placed between the screw main body (11) and the screw hub (7), and by means of which a radial gap (80) between the screw main body (11) and the screen drum circumferential wall (72) is adjustable, wherein the adjusting ring disk (82) is axially tightened by means of the respective axial tightening means together with the screw main body (11) and the screw hub (7).

2. Screen-type screw centrifuge (1) according to claim 1, wherein the screw hub (7) is detachably fixed to the axial end (9) of the screw drive shaft (3).

3. Screen-type screw centrifuge (1) according to claim 1 or 2, wherein the axial access channel (37) has an axial access opening (38) which is disposed radially between the annular-gap cover (23) and the screw main body circumferential wall (19) and which axially faces the second screw main body axial end portion (15) and which is radially overlapped at least partially with the at least one tool engagement portion (35).

4. Screen-type screw centrifuge (1) according to any one of claims 1 to 3, wherein the respective tightening means (21) is formed as an axial tightening means and the screw main body (11) and the screw hub (7) are placed axially one behind the other, optionally joined together axially, and are axially tightened to each other by means of the respective axial tightening means, wherein optionally the respective axial tightening means is formed as a screw which comprises a screw head by which the respective tool engagement portion (35) is formed.

5. Screen-type screw centrifuge according to claim 4, wherein a screw main body annular flange (47) is formed by and/or on the screw main body circumferential wall (19) at the first screw main body axial end portion (13), which extends around the axial axis (5) and via which the screw main body (11) is detachably fixed at its first screw main body axial end portion (13) to a hub annular flange (49) of the screw hub (7), which extends around the axial axis, wherein the screw main body annular flange (47) and the hub annular flange (49) are placed axially one behind the other and are axially tightened together by the respective axial tightening means.

6. Screen-type screw centrifuge (1) according to claim 5, wherein the screw main body annular flange (47) is formed as a screw main body annular flange (47) extending radially inward with respect to the axial axis (5), and wherein the hub annular flange (49) is formed as a hub annular flange (49) extending radially outward with respect to the axial axis (5).

7. Screen-type screw centrifuge (1) according to any one of claims 1-6, wherein the annular-gap cover (23) comprises a hollow cylindrical or hollow conical cover body (25) comprising a cover circumferential wall (27) extending around the axial axis (5), wherein the axial access channel (37) is formed as an annular channel extending radially around the axial axis (5) between the cover circumferential wall (27) and the screw main body circumferential wall (19).

8. Screen-type screw centrifuge (1) according to any one of claims 1-4 or 6-7, provided that in combination with claim 5, wherein the annular-gap cover (23) comprises a cover annular flange (53) extending around the axial axis (5), wherein the cover annular flange (53)
- is joined axially to the screw main body annular flange (47) and/or to the hub annular flange (49) and/or is placed axially between the screw main body annular flange (47) and the hub annular flange (49), and
- is axially tightened together with the screw main body annular flange (47) and the hub annular flange (49) by means of the respective axial tightening means (21).

9. Screen-type screw centrifuge (1) according to any one of claims 1-8 provided that in combination with claim 5,
wherein the adjusting ring disk (82) is axially placed between the screw main body annular flange (11) and the hub annular flange (7), and/or
wherein the adjusting ring disk (82) is axially tightened together with the screw main body annular flange (47) and the hub annular flange (49) by means of the respective axial tightening means.

10. Screen-type screw centrifuge (1) according to any one of claims 1-9, further comprising a separate, annular material feed guide component (41), optionally comprising material guide fins (43), which extends around the axial axis (5) and which is configured to guide the material to be centrifuged, passing through the central opening (29), to an outer side of the screw main body (11), wherein the material feed guide component (43) is axially placed between the screw main body (11) and the screw hub (7) and is tightened, optionally axially tightened, together with the screw main body (11) and the screw hub (7) by means of the respective tightening means (21).

11. Screen-type screw centrifuge (1) according to claim 10, wherein the material feed guide component (41) is placed,
- provided that in combination with claim 5, between the screw main body annular flange (47) and the hub annular flange (49),
- further optionally between the adjusting ring disk (82) and the screw hub (7),
- further optionally and provided that in combination with claim 5, between the adjusting ring disk (82) and the hub annular flange (49),
- further optionally and provided that in combination with claim 8, between the cover annular flange (53) and the screw hub (7),
- further optionally and provided that in combination with claims 5 and 8, between the cover annular flange (53) and the hub annular flange (49).

12. Screen-type screw centrifuge (1) according to any one of claims 1 to 11, further comprising the feed line (31) for feeding material to be centrifuged into the interior of the screw main body (11), which is received in the central opening (29) of the annular-gap cover (23), wherein optionally the feed line (31) comprises a feed line end portion (34) which extends parallel to the axial axis (5) and with which the feed line (31) is received in the central opening (29) of the annular-gap cover (23).

13. Screen-type screw centrifuge system (110) having a screen-type screw centrifuge (1) according to any of the preceding claims and having a U- or V-shaped holding part (112) which has a first leg (114) and a second leg (116) opposite thereto, which are connected to each other via a base (118), wherein a holding piece (120) for attachment to a lifting device (122), optionally to a lifting crane device, is arranged on the first leg (114), optionally in a longitudinally central portion thereof, and wherein a transverse distance (Dq) between the two legs (114, 116) in a direction transverse to the longitudinal extension thereof is greater than a radial distance (Dr) between an inner wall of the screw main body (11) and an outer surface of the screen-type screw centrifuge (1) at the axial level of the screw main body (11), so that the second leg (116) can engage axially into the interior of the screw main body (11) from the second screw main body end portion (15) and simultaneously the first leg (114) can engage over the screen-type screw centrifuge (1), to thereby be able to deposit the screw main body (11) on the second leg (116) for its removal from the screen-type screw centrifuge (1).

14. Method of dismounting a screw main body (11) from a screen-type screw centrifuge (1) according to any one of claims 1-12 or from a screen-type screw centrifuge (1) of a screen-type screw centrifuge system (110) according to claim 13, comprising:
- axially inserting a tool into the screw main body (11) from the second screw main body axial end portion (15) thereof into engagement with the tool receiving portion (35) of the respective tightening means (21),
- releasing the respective tightening means (21) by means of the tool,
- axially removing the screw main body (11) from the one axial end (9) of the screw drive shaft (3) and from the screen-type screw centrifuge in a direction opposite to the second axial end (9) of the screw drive shaft (3),
- wherein optionally and provided that in combination with claim 13, the holding part (112) with its second leg (116) is inserted into the screw main body (11), wherein the first leg (114) engages over the screw centrifuge (1), the screw main body (11) is deposited on the second leg (116) after the respective tightening means (21) has been released, and the holding part (112) with its second leg (116) and the screw main body (11) deposited thereon is moved axially from the first end of the screw drive shaft (3) in the direction opposite to the second axial end (9) of the screw drive shaft (3), and the screw main body (11) is thus removed axially from the screen-type screw centrifuge (1).

## Revendications

1. Centrifugeuse à vis sans fin de tamisage (1), comprenant :
un arbre d'entraînement de vis sans fin (3) qui s'étend le long d'un axe axial (5),
un moyeu de vis sans fin (7) fixé à une extrémité axiale (9) de l'arbre d'entraînement de vis sans fin (3),
un corps principal de vis sans fin creux (11) qui a une première partie d'extrémité axiale de corps principal de vis sans fin (13) et une deuxième partie d'extrémité axiale de corps principal de vis sans fin (15) et qui s'étend axialement le long de l'axe axial (5) de sa première (13) à sa deuxième (15) partie d'extrémité axiale de corps principal de vis sans fin dans une direction opposée à une deuxième extrémité axiale (17) de l'arbre d'entraînement de vis sans fin (3) et qui comprend une paroi périphérique de corps principal de vis sans fin (19) s'étendant autour de l'axe axial (5), le corps principal creux de vis sans fin (11) étant fixé de manière amovible au niveau de sa première partie d'extrémité axiale de corps principal de vis sans fin (13) au moyeu de vis sans fin (7) par au moins un moyen de serrage (21), par lequel le corps principal de vis sans fin (11) et le moyeu de vis sans fin (7) sont serrés l'un contre l'autre,
un couvercle de fente annulaire en forme d'anneau (23) qui a une ouverture centrale (29) pour recevoir un conduit d'alimentation (31) pour l'alimentation de matière à centrifuger à l'intérieur du corps principal de vis sans fin (11) et qui s'étend de la paroi périphérique de corps principal de vis sans fin (19) jusqu'à l'ouverture centrale (29), pour couvrir, lorsque le conduit d'alimentation (31) est inséré dans l'ouverture (29), une fente annulaire (33) entre le conduit d'alimentation (31) reçu et la paroi périphérique de corps principal de vis sans fin (19),
dans laquelle ledit au moins un moyen de serrage (21) a une partie de prise d'outil (35) faisant face à la deuxième partie d'extrémité axiale de corps principal de vis sans fin (15), et
dans laquelle au moins un canal d'accès axial (37) est formé radialement entre la paroi périphérique de corps principal de vis sans fin (19) et le couvercle de fente annulaire (23), par lequel la partie de prise d'outil (35) du moyen de serrage respectif (21) est accessible axialement depuis la deuxième partie d'extrémité axiale de corps principal de vis sans fin (15),
dans laquelle le corps principal de vis sans fin creux (11) est sous la forme d'un cône de vis sans fin creux, où la première partie d'extrémité axiale de corps principal de vis sans fin (13) est une partie d'extrémité axiale de petit diamètre du cône de vis sans fin et la deuxième partie d'extrémité axiale de corps principal de vis sans fin (15) est une partie d'extrémité de grand diamètre du cône de vis sans fin,
la centrifugeuse à vis sans fin de tamisage (1) ayant en outre un tambour de tamisage (70) monté de manière rotative, qui présente une paroi périphérique de tambour de tamisage (72), par lequel le corps principal de vis sans fin (11) est entouré autour de l'axe axial (5) et qui est équipé d'un moyen de tamisage (74), **caractérisée par** un disque annulaire de réglage (82) qui s'étend autour de l'axe axial (5) et qui est placée axialement entre le corps principal de vis sans fin (11) et le moyeu de vis sans fin (7) et moyennant lequel une fente radiale (80) entre le corps principal de vis sans fin (11) et la paroi périphérique de tambour de tamisage (72) peut être réglée, le disque annulaire de réglage (82) étant serré axialement avec le corps principal de vis sans fin (11) et le moyeu de vis sans fin (7) moyennant le moyen de serrage axial respectif.

2. Centrifugeuse à vis sans fin de tamisage selon la revendication 1, dans laquelle le moyeu de vis sans fin (7) est fixé de manière amovible à l'extrémité axiale (9) de l'arbre d'entraînement de vis sans fin (3).

3. Centrifugeuse à vis sans fin de tamisage (1) selon la revendication 1 ou 2, dans laquelle le canal d'accès axial (37) a une ouverture d'accès axial (38) qui est disposée radialement entre le couvercle de fente annulaire (23) et la paroi périphérique de corps principal de vis sans fin (19) et qui fait face axialement à la deuxième partie d'extrémité axiale de corps principal de vis (15) et qui chevauche radialement au moins partiellement ladite au moins une partie de prise d'outil (35).

4. Centrifugeuse à vis sans fin de tamisage (1) selon l'une des revendications 1 à 3, dans laquelle le moyen de serrage respectif (21) est réalisé sous forme de moyen de serrage axial et le corps principal de vis sans fin (11) et le moyeu de vis sans fin (7) sont placés axialement l'un derrière l'autre, éventuellement placés axialement l'un contre l'autre, et sont serrés axialement l'un avec l'autre moyennant le moyen de serrage axial respectif, dans laquelle, éventuellement, le moyen de serrage axial respectif est réalisé sous forme de vis qui présente une tête de vis par laquelle est formée la partie de prise d'outil respective (35) .

5. Centrifugeuse à vis sans fin de tamisage selon la revendication 4, dans laquelle une bride annulaire de corps principal de vis sans fin (47) est formée par et/ou sur la paroi périphérique de corps principal de vis sans fin (19) au niveau de la première partie d'extrémité axiale de corps principal de vis sans fin (13), laquelle s'étend autour de l'axe axial (5) et par l'intermédiaire de laquelle le corps principal de vis sans fin (11) est fixé de manière amovible au niveau de sa première partie d'extrémité axiale de corps principal de vis sans fin (13) à une bride annulaire de moyeu (49) de moyeu de vis sans fin (7), qui s'étend tout autour de l'axe axial, la bride annulaire de corps principal de vis sans fin (47) et la bride annulaire de moyeu (49) étant placées axialement l'une derrière l'autre et serrées axialement l'une avec l'autre par le moyen de serrage axial respectif.

6. Centrifugeuse à vis sans fin de tamisage (1) selon la revendication 5, dans laquelle la bride annulaire de corps principal de vis sans fin (47) est conçue comme une bride annulaire de corps principal de vis sans fin (47) s'étendant radialement vers l'intérieur par rapport à l'axe axial (5), et dans laquelle la bride annulaire de moyeu (49) est conçue comme une bride annulaire de moyeu (49) s'étendant radialement vers l'extérieur par rapport à l'axe axial (5).

7. Centrifugeuse à vis sans fin de tamisage (1) selon l'une des revendications 1 à 6, dans laquelle le couvercle de fente annulaire (23) comprend un corps de couvercle (25) cylindrique creux ou conique creux qui comprend une paroi périphérique de couvercle (27) s'étendant autour de l'axe axial (5), le canal d'accès axial (37) étant formé comme un canal annulaire s'étendant radialement autour de l'axe axial (5) entre la paroi périphérique de couvercle (27) et la paroi périphérique de corps principal de vis sans fin (19).

8. Centrifugeuse à vis sans fin de tamisage (1) selon l'une des revendications 1-4 ou 6-7, si en combinaison avec la revendication 5, dans laquelle le couvercle de fente annulaire (23) comprend une bride annulaire de couvercle (53) s'étendant autour de l'axe axial (5), dans laquelle la bride annulaire de couvercle (53)
- est attachée axialement à la bride annulaire de corps principal de vis sans fin (47) et/ou à la bride annulaire de moyeu (49) et/ou est placée axialement entre la bride annulaire de corps principal de vis sans fin (47) et la bride annulaire de moyeu (49) et
- est serrée axialement avec la bride annulaire de corps principal de vis sans fin (47) et la bride annulaire de moyeu (49) moyennant le moyen de serrage axial respectif (21) .

9. Centrifugeuse à vis sans fin de tamisage (1) selon l'une des revendications 1 à 8, si en combinaison avec la revendication 5,
dans laquelle le disque annulaire de réglage (82) est placé axialement entre la bride annulaire de corps principal de vis sans fin (11) et la bride annulaire de moyeu (7), et/ou
dans laquelle le disque annulaire de réglage (82) est serré axialement avec la bride annulaire de corps principal de vis sans fin (47) et la bride annulaire de moyeu (49) moyennant le moyen de serrage axial respectif.

10. Centrifugeuse à vis sans fin de tamisage (1) selon l'une des revendications 1 à 9, comprenant en outre un élément de guidage d'alimentation en matière annulaire séparé (41), qui comprend éventuellement des ailettes de guidage de matière (43), qui s'étend autour de l'axe axial (5) et qui est conçu pour guider la matière à centrifuger passant par l'ouverture centrale (29) vers un côté extérieur du corps principal de vis sans fin (11), l'élément de guidage d'alimentation en matière (43) étant placé axialement entre le corps principal de vis sans fin (11) et le moyeu de vis sans fin (7) et étant serré, éventuellement serré axialement, avec le corps principal de vis sans fin (11) et le moyeu de vis sans fin (7) moyennant le moyen de serrage respectif (21) .

11. Centrifugeuse à vis sans fin de tamisage (1) selon la revendication 10, dans laquelle l'élément de guidage d'alimentation en matière (41) est placé
- si en combinaison avec la revendication 5, entre la bride annulaire de corps principal de vis sans fin (47) et la bride annulaire de moyeu (49),
- en outre éventuellement entre le disque annulaire de réglage (82) et le moyeu de vis sans fin (7),
- en outre éventuellement et si en combinaison avec la revendication 5, entre le disque annulaire de réglage (82) et la bride annulaire de moyeu (49),
- en outre éventuellement et si en combinaison avec la revendication 8, entre la bride annulaire de couvercle (53) et le moyeu de vis sans fin (7),
- en outre éventuellement et si en combinaison avec les revendications 5 et 8, entre la bride annulaire de couvercle (53) et la bride annulaire de moyeu (49).

12. Centrifugeuse à vis sans fin de tamisage (1) selon l'une des revendications 1 à 11, comprenant en outre le conduit d'alimentation (31) pour l'alimentation de matière à centrifuger à l'intérieur du corps principal de vis sans fin (11), qui est reçu dans l'ouverture centrale (29) du couvercle de fente annulaire (23), dans laquelle, éventuellement, le conduit d'alimentation (31) comprend une partie d'extrémité de conduit d'alimentation (34) qui s'étend parallèlement à l'axe axial (5) et avec laquelle le conduit d'alimentation (31) est reçu dans l'ouverture centrale (29) du couvercle de fente annulaire (23).

13. Système de centrifugeuse à vis sans fin de tamisage (110) avec une centrifugeuse à vis sans fin de tamisage (1) selon l'une des revendications précédentes et avec une pièce de maintien (112) en forme de U ou de V, qui a une première branche (114) et une deuxième branche (116) opposée à celle-ci, qui sont reliées entre elles par une base (118), dans lequel une pièce de maintien (120) est disposée sur la première branche (114), éventuellement dans une partie centrale longitudinale de celle-ci, pour être montée sur un dispositif de levage (122), éventuellement sur un dispositif de grue de levage, et dans lequel une distance transversale (Dq) entre les deux branches (114, 116) dans une direction transversale à leur extension longitudinale est supérieure à une distance radiale (Dr) entre une paroi intérieure du corps principal de vis sans fin (11) et une surface extérieure de la centrifugeuse à vis sans fin de tamisage (1) à hauteur axiale du corps principal de vis sans fin (11), de sorte que la deuxième branche (116) peut venir en prise axialement à l'intérieur du corps principal de vis sans fin (11) à partir de la deuxième partie d'extrémité de corps principal de vis sans fin (15) et que la première branche (114) peut en même temps venir en prise sur la centrifugeuse à vis sans fin de tamisage (1) afin de pouvoir ainsi déposer le corps principal de vis sans fin (11) sur la deuxième branche (116) pour le retirer de la centrifugeuse à vis sans fin (1).

14. Procédé de démontage d'un corps principal de vis sans fin (11) d'une centrifugeuse à vis sans fin de tamisage (1) selon l'une des revendications 1 à 12 ou d'une centrifugeuse à vis sans fin de tamisage (1) d'un système de centrifugeuse à vis sans fin de tamisage (110) selon la revendication 13, comprenant
- l'introduction axiale d'un outil dans le corps principal de vis sans fin (11) à partir de sa deuxième partie d'extrémité axiale de corps principal de vis sans fin (15) en prise avec la partie de réception d'outil (35) du moyen de serrage respectif (21),
- le desserrage du moyen de serrage respectif (21) moyennant l'outil,
- le retrait axial du corps principal de vis sans fin (11) d'une extrémité axiale (9) de l'arbre d'entraînement de vis sans fin (3) et de la centrifugeuse à vis sans fin de tamisage dans une direction opposée à la deuxième extrémité axiale (9) de l'arbre d'entraînement de vis sans fin (3),
- dans lequel, éventuellement et si en combinaison avec la revendication 13, la pièce de maintien (112) est insérée avec sa deuxième branche (116) dans le corps principal de vis sans fin (11), dans lequel la première branche (114) vient en prise sur la centrifugeuse à vis sans fin (1), le corps principal de vis sans fin (11) est déposé sur la deuxième branche (116) après le desserrage du moyen de serrage respectif (21) et la pièce de maintien (112) avec sa deuxième branche (116) et le corps principal de vis sans fin (11) déposé sur celle-ci est déplacée axialement depuis la première extrémité de l'arbre d'entraînement de vis sans fin (3) en direction opposée à la deuxième extrémité axiale (9) de l'arbre d'entraînement de vis sans fin (3) et ainsi le corps principal de vis sans fin (11) est retiré axialement de la centrifugeuse à vis sans fin de tamisage (1).
